# EUROPÄISCHE PATENTANMELDUNG

(11) **EP 4 191 356 A1**
(43) Veröffentlichungstag der Anmeldung: **07.06.2023**
(21) Anmeldenummer: 22210910.0
(22) Anmeldetag: 01.12.2022
(51) Int. Cl.: G05B 23/02

(54) **PRÄDIKTIVE WARTUNG EINER BEHÄLTERBEHANDLUNGSANLAGE**

(30) Priorität: 01.12.2021 DE 102021131684
(71) Anmelder: KRONES AG, 93073 Neutraubling (DE)
(72) Erfinder: Olenberg, Philipp, 93073 Neutraubling (DE); Meyknecht, Christian, 93073 Neutraubling (DE)
(74) Vertreter: Nordmeyer, Philipp Werner

(57) **Zusammenfassung**

Vorrichtung (400), System und Verfahren zur prädiktiven Wartung einer Behälterbehandlungsanlage (1), vorzugsweise einer Getränkeabfüllanlage, wobei die Vorrichtung (400) eingerichtet ist, um Prozessdaten zumindest eines Behandlungsvorgangs eines oder mehrerer Behälter (100), durchgeführt von der Behälterbehandlungsanlage (1), zu empfangen; den Behandlungsvorgang anhand der Prozessdaten zumindest einer aus mehreren Güteklassen zuzuordnen; und aus einer Analyse der Güteklassen einen Verschleißzustand einer oder mehrerer Komponenten der Behälterbehandlungsanlage (1) abzuleiten.

## Beschreibung

### Technisches Gebiet

Die vorliegende Erfindung betrifft eine Vorrichtung, ein System und ein Verfahren zur prädiktiven Wartung einer Behälterbehandlungsanlage, vorzugsweise einer Getränkeabfüllanlage.

### Stand der Technik

In der Getränkeabfüllindustrie, umfassend Anlagen und Prozesse zum Abfüllen, Herstellen, Verschließen, Etikettieren von Behältern und dergleichen, finden zunehmend komplexe Steuerungen Anwendung, die Einstellungen der Industrieanlagen automatisch oder teilautomatisiert vornehmen. So beschreiben die EP 3 495 911 A1 und WO 2019/048051 A1 Verfahren zum automatisierten Anpassen von Prozessparametern einer Abfüllanlage. Die EP 3 187 948 B1 beschreibt ein System und Verfahren zur Verwaltung der Produktqualität in Behälterverarbeitungsanlagen.

Zu diesem Zweck werden Sensor- und andere Prozessdaten während des Betriebs der Anlage aufgezeichnet und gegebenenfalls in Echtzeit verarbeitet, um eine Steuerung/Regelung der Anlage vorzunehmen. So zeichnet beispielsweise eine Füllventilsteuerung ("Filling Valve Control") einer Füllvorrichtung einen Datensatz je Füllvorgang auf.

Diese Prozessdaten können neben der Steuerung/Regelung ferner zur Fehlersuche vor Ort verwendet werden, wobei hierbei ein hoher manueller Analyseaufwand erforderlich ist. Nachteilig daran ist, dass dem Betreiber der Anlage, etwa einem Kunden einer Abfüllanlage, Expertenwissen über technische Details der verwendeten Anlage abverlangt wird. Der Betreiber muss in der Lage sein, auf etwaige Fehler zu reagieren. Eine solche reaktive Wartung führt zu ungeplanten Stillständen der Anlage. Im Rahmen einer systematischen, vorbeugenden Wartung kann es vorkommen, dass fehlerfreie oder weiterhin brauchbare Komponenten getauscht werden, was einen erhöhten Ressourcenaufwand und unnötige Kosten zur Folge hat.

### Darstellung der Erfindung

Eine Aufgabe der Erfindung besteht darin, die Wartung einer Behälterbehandlungsanlage, vorzugsweise einer Getränkeabfüllanlage, zu verbessern, insbesondere eine vorausschauende Wartung zu ermöglichen oder zu unterstützen.

Die Aufgabe wird durch eine Vorrichtung mit den Merkmalen des Anspruchs 1, ein System mit den Merkmalen des Anspruchs 8 und ein Verfahren mit den Merkmalen des nebengeordneten Verfahrensanspruchs gelöst. Vorteilhafte Weiterbildungen folgen aus den Unteransprüchen, der folgenden Darstellung der Erfindung sowie der Beschreibung bevorzugter Ausführungsbeispiele.

Die vorliegende Erfindung betrifft die prädikative Wartung einer Behälterbehandlungsanlage, umfassend beispielsweise eine Anlage zum Befüllen von Behältern und/oder Verschließen von befüllten Behältern und/oder Herstellen, insbesondere Blasformen, von Behältern. Besonders bevorzugt kommt die Erfindung in Anlagen zum Abfüllen von Getränken, beispielsweise Wasser (still oder karbonisiert), Softdrinks, Säften, Smoothies, Bier, Wein, Milchprodukten, Mischgetränken und dergleichen, zur Anwendung.

Die Vorrichtung zur prädiktiven Wartung (hierin auch als "Wartungsunterstützungsvorrichtung" bezeichnet) ist eingerichtet, um Prozessdaten zumindest eines Behandlungsvorgangs eines oder mehrerer Behälter durch die Behälterbehandlungsanlage zu empfangen, den Behandlungsvorgang anhand der Prozessdaten zumindest einer aus mehreren Güteklassen zuzuordnen, und aus einer Analyse der Güteklassen einen Verschleißzustand einer oder mehrerer Komponenten der Behälterbehandlungsanlage abzuleiten.

Zu diesem Zweck steht die Wartungsunterstützungsvorrichtung mit einer Anlagensteuerung der Behälterbehandlungsanlage und/oder untergeordneten Steuerungen einer oder mehrerer Behandlungsstationen, beispielsweise mit einer Füllersteuerung, in Kommunikation. Die darin ohnehin aufgezeichneten Prozessparameter bzw. Prozessdaten, umfassend Sensordaten, können auf einfache Weise der Wartungsunterstützungsvorrichtung zur weiteren Verarbeitung zur Verfügung gestellt werden.

Die Wartungsunterstützungsvorrichtung umfasst eine elektronische Recheneinrichtung, sie kann zentral oder dezentral, Bestandteil internetbasierter und/oder cloudbasierter Anwendungen oder auf andere Weise implementiert sein, sowie gegebenenfalls auf Datenbanken zugreifen. Die Kommunikation mit der Behälterbehandlungsanlage kann drahtlos oder drahtgebunden, digital oder analog erfolgen.

Die Wartungsunterstützungsvorrichtung unterstützt eine vorausschauende, flexible und individuelle Wartung der Behälterbehandlungsanlage, indem Behandlungsvorgänge klassifiziert und daraus Verschleißzustände von Komponenten der Behälterbehandlungsanlage abgeleitet werden. Die Güteklassen definieren hierbei ein Maß für die Qualität der Behandlung. Sie können vorgegeben sein oder während des Aufbaus der Datenbasis manuell oder automatisch erstellt werden. In anderen Worten, Prozessdaten und die mit den Prozessdaten erreichte Behandlungsgüte werden miteinander korreliert, vorzugsweise über eine Vielzahl von Behandlungsvorgängen. Das so akkumulierte "Wissen" kann zur Vorhersage von Verschleißzuständen und zum Ableiten von Handlungsempfehlungen genutzt werden.

Damit verbunden ist eine Vereinfachung der Ersatzteilbeschaffung, beispielsweise durch Integration in einen eShop unter Verknüpfung mit einem bestehenden Kundenkonto und/oder automatische Abwicklung, bevorzugt unter Anwendung sogenannter "smart contracts" und Kryptowährungen.

Die beschriebene Klassifizierung der aufgezeichneten Behandlungsprozesse ist jederzeit um neue Daten erweiterbar. Je mehr Fehlerklassen in der Analyse durch die Wartungsunterstützungsvorrichtung vorhanden sind, desto granularer kann die Klassifikation durchgeführt werden und desto genauer kann die Modellierung für eine Ermittlung von Verschleißzuständen und eine etwaige Vorhersage von Defekten, Ausfallzeiten usw. erfolgen.

Vorzugsweise charakterisiert eine der Güteklassen gute Behandlungsvorgänge, während eine weitere der Güteklassen schlechte Behandlungsvorgänge charakterisiert. Es können weitere Güteklassen vorgesehen sein, oder die Klassifizierung unterscheidet im einfachsten Fall nur zwischen einem guten Behandlungsvorgang und einem schlechten (fehlerhaften, unzureichenden usw.) Behandlungsvorgang (= binäre Klassifikation). Die Wartungsunterstützungsvorrichtung erstellt somit eine klassifizierte Datenbasis, auf deren Grundlage sich nun Handlungsempfehlungen bei zukünftigen Behandlungsvorgängen ableiten lassen. Beispielsweise kann ein Maß für den Verschleißzustand jedes einzelnen Füllorgans eines Füllerkarussells abgeleitet und an die Behälterbehandlungsanlage, eine Bedienperson, einen Hersteller der Behälterbehandlungsanlage, ein Wartungszentrum, Ersatzteillager oder dergleichen zurückgemeldet werden.

Vorzugsweise ist die Wartungsunterstützungsvorrichtung ferner eingerichtet, um für zumindest einen Behandlungsvorgang aus der Güteklasse der schlechten Behandlungen eine Analyse vorangegangener Behandlungsvorgänge vorzunehmen und aus deren Prozessdaten eine weitere Güteklasse, die grenzwertige Behandlungsvorgänge charakterisiert, abzuleiten. Wird zukünftig ein solcher Grenzfall detektiert, können vorausschauende Maßnahmen an der Behälterbehandlungsvorrichtung durchgeführt werden, noch bevor es zu einem Fehler kommt.

Vorzugsweise ist die Wartungsunterstützungsvorrichtung eingerichtet, um Prozessdaten von Behandlungsvorgängen einer oder mehrerer weiterer Behälterbehandlungsanlagen zu empfangen und die Behandlungsvorgänge der weiteren Behälterbehandlungsanlagen anhand der entsprechenden Prozessdaten den Güteklassen zuzuordnen und/oder daraus Güteklassen zu erstellen. Die weiteren Behälterbehandlungsanlagen können äquivalent zur vorliegenden Behälterbehandlungsanlage oder davon abweichend, jedoch zumindest teilweise technisch vergleichbar aufgebaut sein. Über die weiteren Behälterbehandlungsanlagen sind Prozessdaten ermittelbar und auswertbar, die über die lokalen Informationen einer einzigen Behälterbehandlungsanlage hinausgehen. Indem Informationen mehrerer Behälterbehandlungsanlagen herangezogen werden, kann die prädikative Wartung der Behälterbehandlungsanlage(n) verbessert werden, indem jede einzelne Anlage von Informationen anderer vergleichbarer Anlagen profitiert.

Vorzugsweise ist die Wartungsunterstützungsvorrichtung eingerichtet, um den ermittelten Verschleißzustand einer oder mehrerer Komponenten der Behälterbehandlungsanlage oder eine daraus abgeleitete Handlungsempfehlung an eine Einrichtung, vorzugsweise die Behälterbehandlungsanlage, zurückzumelden. Auf diese Weise können manuell oder automatisch vorausschauende Maßnahmen an der Behälterbehandlungsanlage durchgeführt werden, noch bevor es zu einem Fehler kommt.

Vorzugsweise umfasst die Wartungsunterstützungsvorrichtung eine Internet-/Cloud-Anwendung und/oder eine Datenverarbeitung, wobei die Datenverarbeitung vorzugsweise eine zentrale oder dezentrale Datenbank und/oder einen Server und/oder eine KI-Anwendung bereitstellt. Durch die Integration einer Internet-/Cloud-Anwendung können die mit der prädikativen Wartung verbundenen Prozesse als digitale Services implementiert werden.

Vorzugsweise ist der Behandlungsvorgang ein Füllvorgang, bei dem eine Füllvorrichtung der Behälterbehandlungsanlage ein Füllprodukt in einen oder mehrere Behälter einfüllt, wobei die von der Wartungsunterstützungsvorrichtung empfangenen Prozessdaten in diesem Fall vorzugsweise Daten eines oder mehrerer der folgenden Prozessparameter umfassen: Abfülldruck, Vorspannzeit, Vorspanndruck, Evakuierungsdruck, Füllgeschwindigkeit, Füllkurve, Entlastungszeit. Die prädiktive Wartung ist für technisch komplexe Füllvorrichtungen besonders nützlich, um die Stillstandzeiten der Anlage so gering wie möglich zu halten.

Die oben genannte Aufgabe wird ferner durch ein System gelöst, das eine Wartungsunterstützungsvorrichtung gemäß einem der vorstehend beschriebenen Ausführungsvarianten und eine damit in Kommunikation stehende Behälterbehandlungsanlage umfasst.

Die technischen Wirkungen, Vorteile sowie Ausführungsformen, die in Bezug auf die Wartungsunterstützungsvorrichtung beschrieben wurden, gelten analog für das System.

Vorzugsweise ist die Behälterbehandlungsanlage eine Getränkeabfüllanlage mit einer Vorrichtung zum Befüllen von Behältern mit einem Füllprodukt. Die Vorrichtung zum Befüllen von Behältern weist vorzugsweise eine Füllersteuerung auf, die eingerichtet ist, um einen Füllvorgang der Vorrichtung zum Befüllen von Behältern zu steuern, wobei die Füllersteuerung unmittelbar oder über eine Anlagensteuerung, d.h. eine Steuerung höherer Ordnung, mit der Wartungsunterstützungsvorrichtung in Kommunikation steht und eingerichtet ist, um Prozessdaten des Füllvorgangs an die Wartungsunterstützungsvorrichtung zu senden.

Vorzugsweise umfasst die Vorrichtung zum Befüllen von Behältern ein Füllerkarussell und mehrere an dessen Außenumfang installierte Füllorgane, die eingerichtet sind, um das Füllprodukt in entsprechende Behälter einzuleiten, wobei die Wartungsunterstützungsvorrichtung eingerichtet ist, um einen Verschleißzustand eines oder mehrerer der Füllorgane abzuleiten. So kann eine beispielhafte Datenverarbeitung zur prädikativen Wartung umfassen: Datenübertragung einer oder mehrerer Abfüllrunden aller Füllorgane in die Internet-/Cloud-Anwendung der Wartungsunterstützungsvorrichtung; Klassifizieren einer Zeitreihe eines Füllvorgangs durch die Datenverarbeitung, etwa mithilfe statistischer Methoden, neuronaler Netze oder dergleichen.

Die oben genannte Aufgabe wird ferner durch ein Verfahren zur prädiktiven Wartung einer Behälterbehandlungsanlage, vorzugsweise einer Getränkeabfüllanlage, gelöst, wobei das Verfahren umfasst: Empfangen von Prozessdaten zumindest eines Behandlungsvorgangs eines oder mehrerer Behälter, durchgeführt von der Behälterbehandlungsanlage; Zuordnen des Behandlungsvorgangs anhand der Prozessdaten zumindest einer aus mehreren Güteklassen, und Ableiten aus einer Analyse der Güteklassen eines Verschleißzustands einer oder mehrerer Komponenten der Behälterbehandlungsanlage.

Die technischen Wirkungen, Vorteile sowie Ausführungsformen, die in Bezug auf die Wartungsunterstützungsvorrichtung sowie das System beschrieben wurden, gelten analog für das Verfahren.

So charakterisiert aus den oben genannten Gründen vorzugsweise eine der Güteklassen gute Behandlungsvorgänge, während eine weitere der Güteklassen schlechte Behandlungsvorgänge charakterisiert.

Vorzugsweise wird aus den oben genannten Gründen für zumindest einen Behandlungsvorgang aus der Güteklasse der schlechten Behandlungen eine Analyse vorangegangener Behandlungsvorgänge vorgenommen, wobei aus deren Prozessdaten eine weitere Güteklasse, die grenzwertige Behandlungsvorgänge charakterisiert, abgeleitet wird.

Vorzugsweise werden aus den oben genannten Gründen Prozessdaten von Behandlungsvorgängen einer oder mehrerer weiterer Behälterbehandlungsanlagen empfangen, wobei die Behandlungsvorgänge der weiteren Behälterbehandlungsanlagen anhand der entsprechenden Prozessdaten den Güteklassen zugeordnet und/oder daraus Güteklassen erstellt werden.

Vorzugsweise ist aus den oben genannten Gründen der Behandlungsvorgang ein Füllvorgang des Einfüllens eines Füllprodukts in zumindest einen Behälter, wobei die empfangenen Prozessdaten vorzugsweise Daten eines oder mehrerer der folgenden Prozessparameter umfassen: Abfülldruck, Vorspannzeit, Vorspanndruck, Evakuierungsdruck, Füllgeschwindigkeit, Füllkurve, Entlastungszeit.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Darstellung einer Getränkeabfüllanlage gemäß einem Ausführungsbeispiel, umfassend eine Vorrichtung zum Befüllen von Behältern mit einem Füllprodukt;
- Figur 2: eine schematische Darstellung der Vorrichtung zum Befüllen von Behältern mit einem Füllprodukt gemäß einem Ausführungsbeispiel; und
- Figur 3: eine schematische Darstellung einer Vorrichtung zur prädiktiven Wartung einer Behälterbehandlungsanlage.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholte Beschreibung dieser Elemente wird teilweise verzichtet, um Redundanz zu vermeiden.

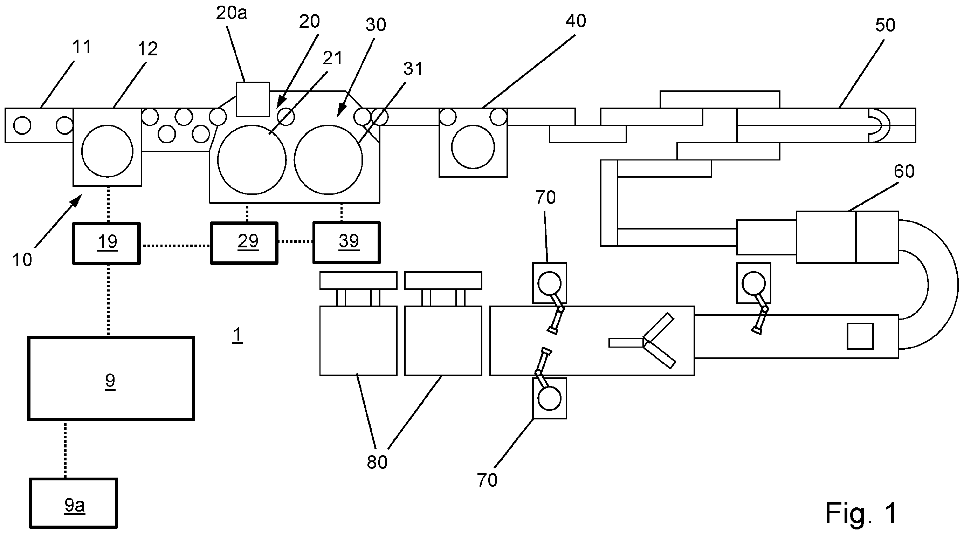

Die Figur 1 zeigt eine Behälterbehandlungsanlage 1, die mehrere Behälterbehandlungsstationen umfasst. Die Behälterbehandlungsanlage 1 ist im vorliegenden Ausführungsbeispiel eine Getränkeabfüllanlage, da zumindest eine der Behälterbehandlungsstationen eine Vorrichtung 20 zum Befüllen der Behälter (in der Figur 1 nicht gezeigt) mit einem Füllprodukt, insbesondere einem Getränk, ist.

Die Behälterbehandlungsanlage 1 umfasst gemäß dem vorliegenden Ausführungsbeispiel die folgenden Behälterbehandlungsstationen: eine Vorrichtung 10 zur Herstellung von Behältern, hierin auch als "Behälterherstellungsvorrichtung" bezeichnet; eine Vorrichtung 20 zum Befüllen der Behälter mit einem Füllprodukt, hierin auch als "Füllvorrichtung" bezeichnet; eine Vorrichtung 30 zum Verschließen der Behälter mit je einem Behälterverschluss, beispielsweise Kronkorken oder Drehverschluss, hierin auch als "Verschließvorrichtung" bezeichnet; eine Vorrichtung 40 zur Etikettierung der Behälter, hierin auch als "Etikettierer" bezeichnet; einen Puffer 50 zur temporären Pufferung von befüllten und etikettierten Behältern sowie zum Ausgleich etwaiger unterschiedlicher Verarbeitungs-/Transportgeschwindigkeiten zwischen Anlagenteilen; eine Packvorrichtung 60 zum Verpacken der Behälter; Roboter 70 zur Lagenherstellung; und einen Palettierer 80, der die verpackten Behälter auf Ladungsträger zusammenfasst.

Die Behälterbehandlungsanlage 1 umfasst demnach eine oder mehrere Behälterbehandlungsstationen, die beispielsweise von der Herstellung der Behälter über deren Befüllung, das Verschließen, Etikettieren bis hin zum Verpacken derselben sukzessive durchlaufen werden. Zu diesem Zweck werden die Behälter beziehungsweise deren Vorformlinge, eine auch als "Preform" bezeichnete Vorstufe der Behälter vor dem Blasformen oder Streckblasformen, entlang eines Förderwegs transportiert. Der Transport erfolgt mittels Transportsternen, Transportbändern und dergleichen, die in der Figur 1 teilweise schematisch dargestellt sind. Vorformlinge, Behälter, Behälterverschlüsse sowie dafür eingerichtete Halterungen/Klammern sind der Übersichtlichkeit halber in der Figur 1 nicht dargestellt. Transporteinrichtungen wie Transportsterne oder Transportbänder können allein der Förderung dienen oder mit Behandlungsorganen entsprechend den Behandlungsstationen ausgestattet sein.

Die in der Figur 1 gezeigten Behälterbehandlungsstationen der Behälterbehandlungsanlage 1 sind nur beispielhaft. So kann die Behälterbehandlungsanlage 1 mit weiteren oder alternativen Behälterbehandlungsstationen, wie etwa einer Reinigungsvorrichtung, einer Prüfvorrichtung zur Sicherstellung der Qualität, beispielsweise zum Prüfen, ob Fremdpartikel in die abgefüllten Behälter gelangt sind, und dergleichen ausgestattet sein. Ebenso können Stationen entfallen, wie etwa die Behälterherstellungsvorrichtung 10, wenn die Behälter bereits in der endgültigen, zu befüllenden Form angeliefert werden, der Puffer 50, die Packvorrichtung 60 und/oder andere.

Die Behälterherstellungsvorrichtung 10 weist eine Einrichtung 11 zum Vorbereiten und Vorwärmen von Vorformlingen aus Kunststoff, vorzugsweise PET, auf. Die so vorbereiteten Vorformlinge werden an eine Blaseinrichtung 12 übergeben, in der die erwärmten Vorformlinge durch Blasen oder Streckblasen zu den zu befüllenden Behältern expandiert werden. Zu diesem Zweck werden die Vorformlinge in Blasformen, deren Hohlraumkontur der beabsichtigten Behälteraußenform entspricht, mit einem Gas unter Druck beaufschlagt und beim Streckblasen auch mit einer Streckstange/Reckstange gedehnt, um die Vorformlinge in die gewünschte Behälterform zu bringen. Die Behälterherstellungsvorrichtung 10 kann eine nicht näher dargestellte Vorrichtung zur Reinigung, Sterilisierung und/oder Beschichtung der Behälter umfassen.

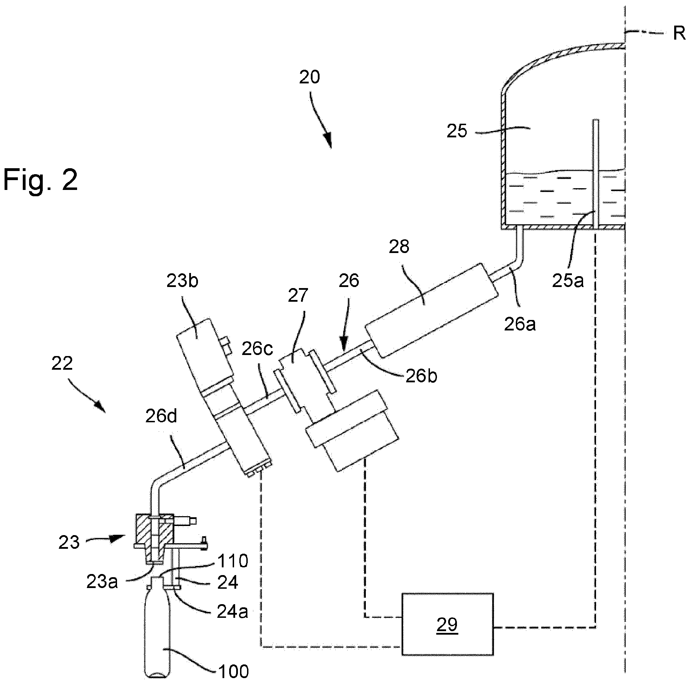

Die so hergestellten Behälter werden an die Füllvorrichtung 20 übergeben. In den Ausführungsbeispielen der Figuren 1 und 2 beruht die Füllvorrichtung 20 auf einer Rundläuferbauweise. Sie umfasst zu diesem Zweck ein Füllerkarussell 21, an dessen Außenumfang eine Vielzahl von Füllorganen (in der Figur 1 nicht dargestellt) vorgesehen ist, die zum Einleiten des Füllprodukts in die Behälter eingerichtet sind. Die Füllvorrichtung 20 kann einen Mixer 20a umfassen, der eingerichtet ist, um ein Füllprodukt bestehend aus mehreren Komponenten herzustellen, beispielsweise durch Einmischen von Sirup in einen Trinkwasserstrom.

Nach dem Befüllen werden die Behälter an die Verschließvorrichtung 30 übergeben, die ebenfalls in Rundläuferbauweise ausgeführt sein kann. Die Verschließvorrichtung 30 umfasst hierfür ein Verschließerkarussell 31, an dessen Außenumfang eine Vielzahl von Verschließorganen (in der Figur 1 nicht dargestellt) vorgesehen ist, die zum Verschließen der befüllten Behälter mit je einem Behälterverschluss eingerichtet sind.

Die Übergabe der befüllten Behälter von der Füllvorrichtung 20 an die Verschließvorrichtung 30 kann unmittelbar vom Füllerkarussell 21 an das Verschließerkarussell 31 oder mithilfe eines oder mehrerer Transfersterne erfolgen. Alternativ können die Füllvorrichtung 20 und die Verschließvorrichtung 30 zu einem Füller/Verschließer integriert sein, bei dem die Bearbeitungsprozesse Befüllen und Verschließen an unterschiedlichen Behandlungswinkeln ein und desselben Behandlungskarussells erfolgen.

Die Figur 2 zeigt schematisch eine beispielhafte Vorrichtung 20 zum Befüllen von Behältern 100 mit einem Füllprodukt.

In dem in der Figur 2 gezeigten Ausführungsbeispiel umfasst die Füllvorrichtung 20 ein Füllventil 23, das über eine Ventilmündung 23a ein Füllprodukt in den Behälter 100 einleitet. Als Füllprodukt kommen vorzugsweise Getränke in Betracht, beispielsweise Wasser (still oder karbonisiert), Softdrinks, Säfte, Bier, Wein, Milchprodukte, Mischgetränke und dergleichen.

Während des Füllprozesses steht die Mündung 110 des Behälters 100 vorzugsweise mit dem Füllventil 23 druckdicht in Kontakt, wodurch der Füllprozess als Gegendruckverfahren oder Unterdruckverfahren durchführbar ist. Allerdings kann das Füllventil 2 auch als Freistrahlventil ausgebildet sein, so dass das Füllprodukt nach Überbrückung eines Freistrahlbereichs in die Mündung 110 des Behälters 100 eingefüllt wird. Ferner können der Füllprozess und gegebenenfalls ein anschließendes Verschließen des Behälters 100 in einer druck- und vakuumdichten Behandlungskammer (in den Figuren nicht gezeigt) stattfinden, die es ermöglicht, eine definierte Atmosphäre mit einem definierten Druck bereitzustellen, um beispielsweise einer etwaigen Überschäumneigung des Füllprodukts entgegenzuwirken oder den Behälter 100 in einer definierten Gasatmosphäre und/oder unter Vakuum oder Überdruck zu verschließen.

Der zu befüllende Behälter 100 wird über eine Behälterhalterung 24 während der Befüllung an dem oder unter dem Füllventil 23 gehalten. Die Behälterhalterung 24 weist vorzugsweise eine Halteklammer 24a zum Halten des zu befüllenden Behälters 100 im Halsbereich auf, etwa unterhalb eines hier nicht gezeigten Halsrings des Behälters 100. Es wird hierbei auch von einem sogenannten "neck handling" des Behälters 100 gesprochen. Das "neck handling" findet insbesondere im Fall des Befüllens von Kunststoffbehältern in Form von PET-Flaschen Anwendung. In einer in den Figuren nicht gezeigten Alternative kann der zu befüllende Behälter 100 auch in seinem Bodenbereich gehalten beziehungsweise gestützt werden, beispielsweise durch einen Führungsteller, auf dem der zu befüllende Behälter 100 aufsteht. Es wird hierbei auch von einem sogenannten "base handling" des Behälters 100 gesprochen. Das "base handling" findet insbesondere im Fall des Befüllens von Glasflaschen Anwendung. In einer in den Figuren ebenfalls nicht gezeigten Alternative kann der zu befüllende Behälter 100 auch im Bereich des Behälter- bzw. Flaschenbauchs oder auf eine andere geeignete Weise gehalten und/oder gestützt und transportiert werden.

Das Füllventil 23 ist besonders bevorzugt als Proportionalventil 23b ausgebildet oder umfasst ein solches, das der Ventilmündung 23a vorgelagert ist, d.h. stromaufwärts der Ventilmündung 23a angeordnet ist. Optional kann im Bereich der Ventilmündung 23a ein Sperrventil vorgesehen sein, das die Ventilmündung 23a nach Bedarf öffnet/schließt. Das Proportionalventil 23b ist eingerichtet, um den Volumenstrom des Füllprodukts zu variieren, somit die pro Zeiteinheit in den Behälter 100 eingeleitete Füllproduktmenge zu regulieren. Ziel ist es, ein effizientes, exaktes und produktschonendes Befüllen entlang einer definierten Füllkurve, die im Allgemeinen eine zeitabhängige Funktion der Füllgeschwindigkeit oder des Volumenstroms ist, sicherzustellen.

Das Proportionalventil 23b kann beispielsweise so aufgebaut sein, dass ein vom Füllprodukt durchflossener Ringspalt in seiner Dimension variierbar ist. Die Schaltstellung des Proportionalventils 23b, also beispielsweise die aktuell geschaltete Abmessung/Dimension des Ringspalts, ist bekannt und reproduzierbar einstellbar, beispielsweise durch die Verwendung eines Schrittmotors zum Antrieb des Proportionalventils 23b.

Mit dem Proportionalventil 23b können eine oder mehrere Eigenschaften der Füllkurve, wie beispielsweise das Füllende bei Erreichen eines gewünschten Füllniveaus oder die Füllkurve in ihrer Gesamtheit festgelegt werden.

Das Füllprodukt wird vor der eigentlichen Abfüllung in die zu befüllenden Behälter 100 in einem Füllproduktreservoir 25 zwischengelagert, wobei das Füllproduktreservoir 25 hier in Form eines Zentralkessels eines Rundläuferfüllers gezeigt ist. In einer alternativen Ausführungsform kann das Füllproduktreservoir 25 auch in Form eines Ringkessels, einer Ringleitung oder einer Verteilerzuführung ausgebildet sein.

In dem Füllproduktreservoir 25 ist das Füllprodukt bis zu einer bestimmten Füllhöhe eingefüllt und kann von dort aus über eine Füllproduktleitung 26, die hier beispielhaft einen ersten Leitungsabschnitt 26a, einen zweiten Leitungsabschnitt 26b, einen dritten Leitungsabschnitt 26c sowie einen vierten Leitungsabschnitt 26d aufweist, zum Füllventil 23 fließen und von dort aus in den zu befüllenden Behälter 100 eingeleitet werden.

Neben dem Proportionalventil 23b zur Steuerung oder Regelung des Füllproduktflusses ist weiterhin ein Durchflussmesser 27 vorgesehen, der für eine Detektion der Fluidmenge bzw. des Volumenstroms des die Füllproduktleitung 26 durchfließenden Füllprodukts eingerichtet ist. Mittels des Durchflussmessers 27 kann gegebenenfalls auch die in den Behälter 100 eingebrachte Füllproduktmenge ermittelt werden, etwa durch Integrieren bzw. Aufsummieren des ermittelten Volumenstroms. Auf diese Weise kann nach Erreichen eines gewünschten Füllproduktniveaus in dem Behälter 100 der Füllvorgang durch Schließen des Proportionalventils 23b und/oder durch Schließen eines hier nicht gezeigten Sperrventils beendet werden kann. Alternativ zum Durchflussmesser 27 sind auch andere Sensoren anwendbar, wie beispielsweise Wägezellen und/oder Kurzschlusssonden. Alternativ kann auf einen Sensor verzichtet werden, wenn ein Zeitfüllprozess zur Anwendung kommt, dem zur Ermittlung des Volumenstroms beispielsweise Rechenmodelle zu Grunde liegen.

Das Füllventil 23 inkl. Proportionalventil 23b, der Durchflussmesser 27 und Abschnitte der Füllproduktleitung 26, etwa die Leitungsabschnitte 26b, 26c und 26d, können eine gedankliche und/oder bauliche Einheit bzw. Komponente bilden, die hierin als Füllorgan 22 bezeichnet ist.

Die in der Figur 2 gezeigte Füllvorrichtung 20 zeigt nur ein Füllorgan 22, das mit dem Füllproduktreservoir 25 in Fluidverbindung steht. Die Füllvorrichtung 20 weist jedoch vorzugsweise eine Vielzahl von Füllorganen 22 auf, die etwa um das dann gemeinsame Füllproduktreservoir 25 herum und am Außenumfang des Füllerkarussells 21 (vgl. Figur 1) angeordnet sind, um auf diese Weise einen Füller in Rundläuferbauweise auszubilden. Das Füllerkarussell 21 rotiert um eine schematisch gezeigte Rotationsachse R, um während der Rotation die Behälter 100 zu befüllen und diese gleichzeitig entlang einer kreisförmigen Trajektorie zu transportieren. Am Umfang des Füllerkarussells 21 können beispielsweise mehr als 20 oder 50 Füllorgane 22 angeordnet sein, sodass eine effiziente Befüllung eines dem Rundläuferfüller zugeführten Stromes an zu befüllenden Behältern 100 durchführbar ist.

Die Füllvorrichtung 20 kann - als Bestandteil oder außerhalb des Füllorgans 22 - einen oder mehrere Filter 28 aufweisen, angeordnet vorzugsweise zwischen dem ersten Abschnitt 26a und dem zweiten Abschnitt 26b der Füllproduktleitung 26. Der Filter 28 ist eingerichtet, um eine Reinigung des Füllprodukts vor der Abfüllung vorzunehmen, beispielsweise um Partikel, Viren, Bakterien, Keime, Pilze usw. aus dem Füllprodukt herauszufiltern.

Die aktuelle Füllhöhe des Füllprodukts im Füllproduktreservoir 25 kann beispielsweise mittels einer Füllhöhensonde (in den Figuren nicht gezeigt) gemessen werden.

Die Füllvorrichtung 20 weist ferner eine Füllersteuerung 29 auf, die zur Kommunikation mit dem Füllorgan 22 eingerichtet ist. Insbesondere steht die Füllersteuerung 29 mit dem Proportionalventil 23b, der Füllhöhensonde sowie dem Durchflussmesser 27 in Kommunikation, um unter Verwendung der vom Durchflussmesser 27 ermittelten Volumenstromwerte die aktuelle Schaltstellung des Proportionalventils 23b festzulegen. Ferner kann eine Auswertung der Füllhöhe im Füllproduktreservoir 25 mittels der Füllersteuerung 29 erfolgen. Die Füllhöhensonde und der Durchflussmesser 27 sind beispielhafte Sensoren zur Überwachung des Füllprozesses.

Zurückkommend auf die Figur 1 können auch die anderen Behälterbehandlungsstationen mit entsprechenden Steuerungseinrichtungen ausgestattet sein; beispielhaft sind eine Behälterherstellungssteuerung 19 und eine Verschließersteuerung 39 eingezeichnet. Die einzelnen Steuerungseinrichtungen 19, 29, 39 können zentral oder dezentral, Bestandteil internetbasierter und/oder cloudbasierter Anwendungen oder auf andere Weise implementiert sein, sowie gegebenenfalls auf Datenbanken zugreifen. Die Kommunikation der Steuerungseinrichtungen 19, 29, 39 untereinander und/oder mit einer übergeordneten Anlagensteuerung 9 und/oder mit den anzusteuernden Komponenten, auszulesenden Sensoren usw. kann drahtlos oder drahtgebunden, digital oder analog erfolgen. Ferner müssen die Steuerungseinrichtungen 9, 19, 29, 39 nicht durch seperate Einrichtungen implementiert sein, sondern können teilweise oder vollständig integriert sein.

Die Anlagensteuerung 9 kann als LMS (Line-Management-System) realisiert sein, das die verschiedenen Stationen der Behälterbehandlungsanlage 1 überwacht und/oder steuert, beispielsweise über eine Kommunikation mit den untergeordneten, stationsspezifischen Steuerungseinrichtungen 19, 29, 39.

Die Füllersteuerung 29 (gegebenenfalls in Zusammenwirkung mit der Anlagensteuerung 9) ist eingerichtet, um das Füllorgan 22 der Füllvorrichtung 20 so anzusteuern, dass das Füllprodukt in der gewünschten Menge und Geschwindigkeit in den Behälter 100 eingeleitet wird. Zu diesem Zweck können in der Füllersteuerung 29 oder Anlagensteuerung 9 ein oder mehrere Prozessparametersätze hinterlegt sein, die das Prozessverhalten der Füllvorrichtung 20 vorgeben, beispielsweise Drücke, Entlastungszeiten und dergleichen. Diese Parametersätze sind in der Regel voreingestellt und können beispielsweise verschiedenen abzufüllenden Füllproduktsorten zugeordnet sein.

Im einfachsten Fall wird das Füllprodukt mit einer konstanten Fließgeschwindigkeit bzw. einem konstanten Volumenstrom in den Behälter 100 eingeleitet. Die Fließgeschwindigkeit bzw. der Volumenstrom während der Befüllung kann jedoch eine detailliertere funktionale Abhängigkeit aufweisen, etwa als Funktion der Zeit, eines Fülldrucks und/oder anderer Größen.

Die konkrete Ausprägung der Füllkurve kann vom abzufüllenden Füllprodukt, Behälterformat (Größe, Geometrie, Material usw.), der Füllerleistung und anderen Größen abhängig sein. Die Inbetriebnahme der Behälterbehandlungsanlage 1, ein Sortenwechsel, Behälterformatwechsel oder dergleichen erfolgt beispielsweise dadurch, dass eine Bedienperson eine vorher angelegte Konfiguration im Menü eines HMI-Moduls 9a ("Human-Maschine-Interface-Module") auswählt, vgl. Figur 1. Das HMI-Modul 9a kann Teil der Anlagensteuerung 9 sein oder mit dieser kommunizieren. Das HMI-Modul 9a kann auch alternativ oder zusätzlich mit einer oder mehreren der untergeordneten Steuerungseinrichtungen 19, 29, 39 kommunizieren. Das HMI-Modul 9a kann eine mobile Kommunikationseinrichtung sein, beispielsweise ein Tablet oder Smartphone.

Der ausgewählten Konfiguration sind Prozessparameter (Abfülldruck, Vorspannzeit, Füllkurve usw.) als Datensatz in der Anlagensteuerung 9 und/oder den Steuerungseinrichtungen 10, 29, 39 hinterlegt, die zur Ansteuerung der Behälterbehandlungsanlage 1 herangezogen werden. Ferner zeichnen die Anlagensteuerung 9 und/oder die Steuerungseinrichtungen 10, 29, 39 Prozessdaten auf, die während des Betriebs der Behälterbehandlungsanlage 1 anfallen, ermittelt beispielsweise durch entsprechende Sensoren.

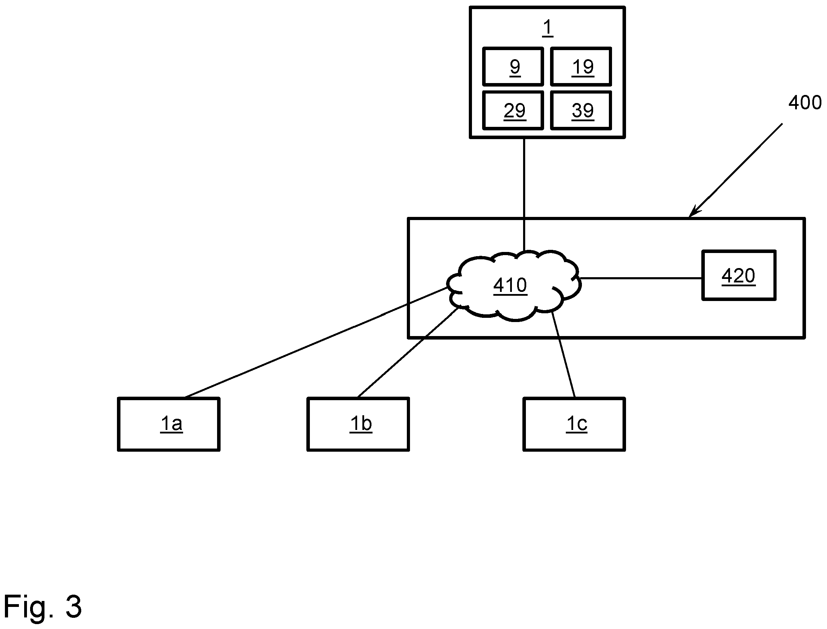

Die Figur 3 zeigt schematisch eine Vorrichtung 400 zur prädiktiven Wartung (hierin auch als "Wartungsunterstützungsvorrichtung" bezeichnet) einer Behälterbehandlungsanlage 1, wie beispielsweise der Getränkeabfüllanlage der Figur 1.

Die Wartungsunterstützungsvorrichtung 400 steht mit der Behälterbehandlungsanlage 1, insbesondere einer oder mehreren der Steuerungen 9, 19, 29, 39 in Kommunikation. Darüber hinaus kann die Wartungsunterstützungsvorrichtung 400 mit weiteren Behälterbehandlungsanlagen 1a, 1b, 1c bzw. deren Steuerungen in Kommunikation stehen, um Prozessdaten aus den Behälterbehandlungsanlagen 1, 1a, 1b, 1c zu empfangen und zu verarbeiten. Die weiteren Behälterbehandlungsanlagen 1a, 1b, 1c können äquivalent zu den vorstehend dargelegten Ausführungsbeispielen oder davon abweichend, jedoch zumindest teilweise technisch vergleichbar aufgebaut sein.

In anderen Worten, über die Wartungsunterstützungsvorrichtung 400 können Prozessdaten aus einer oder mehreren, bevorzugt hunderten, Behälterbehandlungsanlagen 1, 1a, 1b, 1c zusammengetragen, verarbeitet und den Anlagen, insbesondere der vorliegenden, wartungstechnisch auszuwertenden Behälterbehandlungsanlage 1 zur Verfügung gestellt werden. Indem Informationen mehrerer Behälterbehandlungsanlagen 1, 1a, 1b, 1c herangezogen werden, kann die prädikative Wartung der Behälterbehandlungsanlagen 1, 1a, 1b, 1c verbessert werden, indem jede einzelne Anlage von Informationen anderer vergleichbarer Anlagen profitiert.

Die Wartungsunterstützungsvorrichtung 400 umfasst vorzugsweise eine Internet-/Cloud-Anwendung 410, die den Bezug sowie die Distribution der Informationen von den Behälterbehandlungsanlagen 1, 1a, 1b, 1c sowie an diese standardisiert und durch Verwendung existierender Infrastrukturen und Informationsprotokolle vereinfacht.

Ferner kann die Wartungsunterstützungsvorrichtung 400 eine Datenverarbeitung 420 in Form eines Rechenzentrums oder dezentraler Rechenstrukturen umfassen oder mit einer solchen in Kommunikation stehen.

Die Datenverarbeitung 420 kann eine zentrale Datenbank, einen Server, KI-Anwendungen usw. bereitstellen. Neben automatisch abfragbaren Daten können bedarfsweise zusätzlich Daten manuell in eine Datenbank der Datenverarbeitung 420 eingegeben werden, beispielsweise aus Labortests.

Prozessdaten, die in einer oder mehreren der Behälterbehandlungsanlagen 1, 1a, 1b, 1c gemessen und von der Wartungsunterstützungsvorrichtung 400 bezogen werden können, umfassen beispielsweise Daten eines oder mehrerer der folgenden Prozessparameter: Abfülldruck, Vorspannzeit, Vorspanndruck, Evakuierungsdruck, Füllgeschwindigkeit, Füllkurve, Entlastungszeit, jeweils individuell erfassbar für die Füllorgane 22; Kesseldruck; Behandlungszeit (Reinigungszeit, Sterilisationszeit, Spülzeit) in Abhängigkeit verschiedener Anlagenteile sowie in Abhängigkeit des Behandlungsmediums (Reinigungsmittel, Sterilisationsmittel, Spülmittel); Temperatur; Temperatur-Zeit-Profil; Leitfähigkeit; Durchfluss; Informationen über Ablagerungen bzw. Rückstände.

Durch die Wartungsunterstützungsvorrichtung 400 können auf diese Weise Informationen verschiedener Sensortypen, Sensorpositionen usw. zusammengefasst und verarbeitet werden, selbst wenn die vorliegende, zu betrachtende Behälterbehandlungsanlage 1 nicht mit den betreffenden Sensoren ausgestattet ist. Die vorliegende Behälterbehandlungsanlage 1 kann somit von anderen Anlagen mit Sensoren profitieren, sowie von deren Sensordaten lernen. In anderen Worten, die Messtechniken verschiedener Behälterbehandlungsanlagen 1, 1a, 1b, 1c werden synergetisch zusammengefasst, wodurch eine einzelne Behälterbehandlungsanlage 1, 1a, 1b, 1c gegebenenfalls mit weniger Sensoren auskommt und somit der maschinenbauliche Aufwand insgesamt sinkt.

Ferner können durch ein solches Zusammenschalten Eigenschaften der Sensoren, wie etwa Sensorpositionen oder Sensoreinstellungen, optimiert werden. Beispielsweise können verschiedene Standorte eines Sensors an zwei oder mehr vergleichbaren Behälterbehandlungsanlagen 1, 1a, 1b, 1c miteinander verglichen werden, um die optimalen Standorte und/oder Einstellungen aufzufinden.

Eine beispielhafte Datenverarbeitung zur prädikativen Wartung der Behälterbehandlungsanlage 1 kann umfassen: Datenübertragung einer oder mehrerer Abfüllrunden aller Füllorgane 22 in die Internet-/Cloud-Anwendung 410 der Wartungsunterstützungsvorrichtung 400; Klassifizieren einer Zeitreihe eines Füllvorgangs durch die Datenverarbeitung 420, etwa mithilfe statistischer Methoden, neuronaler Netze oder dergleichen.

Die Klassifizierung unterscheidet im einfachsten Fall zwischen einem guten Füllvorgang und einem schlechten Füllvorgang (= binäre Klassifikation). Der Wartungsunterstützungsprozess umfasst somit das Erstellen einer klassifizierten Datenbasis, d.h. es werden ein oder mehrere Füllvorgänge aufgezeichnet, und jeder Füllvorgang wird einer Klasse, beispielsweise guter Füllvorgang/schlechter Füllvorgang, zugeordnet. Im vorliegenden einfachen Fall einer binären Klassifikation können die Füllvorgänge durch Auswertung relevanter Prozessparameter somit in die Klassen "guter Behälter", "schlechter Behälter" einsortiert werden. Je nach Anzahl der Klassen kann auch zwischen mehreren Füllorgan-Zuständen unterschieden werden.

Durch die Zuordnung der Füllvorgänge in spezifische Fehlerklassen lassen sich nun Handlungsempfehlungen ableiten. Beispielsweise kann ein Maß für den Verschleißzustand jedes einzelnen Füllorgans 22 abgeleitet und an die Behälterbehandlungsanlage 1, eine Bedienperson, einen Hersteller der Behälterbehandlungsanlage 1, ein Wartungszentrum, Ersatzteillager oder dergleichen zurückgemeldet werden.

In einer Weiterentwicklung des vorstehend beschriebenen Wartungsunterstützungsprozesses kann die Analyse der aufgezeichneten Zeitreihen eines schlechten Füllvorgangs einen Rückblick auf die Zeit vor dem Eintritt eines Fehlerzustands umfassen. Daraus lässt sich eine weitere Klasse "Grenzfall" ableiten. Wird im Weiteren ein solcher Grenzfall detektiert, kann eine vorausschauende Maßnahme am betreffenden Füllorgan 22 durchgeführt werden, noch bevor es zu einem Fehler kommt. In Anlehnung an die obige Terminologie enthält diese Ausbaustufe folgende Klassen: "guter Behälter", "schlechter Behälter", "Grenzfälle".

In einer Weiterentwicklung können weitere Fehlerklassen analysiert und die Datenbasis um diese Fehlerklassen ergänzt werden. So lassen sich daraus beispielsweise Ersatzteilvorschläge ableiten und an die Behälterbehandlungsanlage 1, eine Bedienperson, einen Hersteller der Behälterbehandlungsanlage 1, ein Wartungszentrum, Ersatzteillager oder dergleichen zurückleiten. In Anlehnung an die obige Terminologie enthält diese Ausbaustufe folgende Klassen: "guter Behälter", "schlechter Behälter, Komponente A defekt", "schlechter Behälter, Komponente B defekt", "Grenzfall Komponente A geht/defekt", "Grenzfall Komponente B geht/defekt" usw..

Der vorstehend beschriebene Wartungsunterstützungsprozess ist beispielhaft auf den Füllprozess bezogen, lässt sich jedoch analog auf Prozesse anderer Behälterbehandlungsstationen der Behälterbehandlungsanlage(n) 1, 1a, 1b, 1c übertragen, beispielsweise auf das Blasformen und Verschließen der Behälter 100.

Die Vorrichtung 400 zur prädiktiven Wartung erlaubt eine vorausschauende, flexible und individuelle Wartung der Behälterbehandlungsanlage(n) 1, 1a, 1b, 1c, insbesondere der Füllorgane 22, sofern vorhanden. Damit verbunden ist eine Vereinfachung der Ersatzteilbeschaffung, beispielsweise durch Integration in einen eShop unter Verknüpfung mit einem bestehenden Kundenkonto und/oder automatische Abwicklung, bevorzugt unter Anwendung sogenannter "smart contracts" und Kryptowährungen.

Die beschriebene Klassifizierung der aufgezeichneten Behandlungsprozesse ist jederzeit um neue Daten erweiterbar. Je mehr Fehlerklassen in der Analyse durch die Vorrichtung 400 zur prädiktiven Wartung vorhanden sind, desto granularer kann die Klassifikation durchgeführt werden und desto genauer kann die Modellierung für eine Ermittlung von Verschleißzuständen und eine etwaige Vorhersage von Defekten, Ausfallzeiten usw. erfolgen.

Durch die Integration einer Internet-/Cloud-Anwendung 410 in die Vorrichtung 400 zur prädiktiven Wartung können die mit der prädikativen Wartung verbundenen Prozesse als digitale Services implementiert werden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezuqszeichenliste

- 1: Behälterbehandlungsanlage
- 1a: Behälterbehandlungsanlage
- 1b: Behälterbehandlungsanlage
- 1c: Behälterbehandlungsanlage
- 9: Anlagensteuerung
- 9a: HMI-Modul
- 10: Vorrichtung zur Herstellung von Behältern
- 11: Einrichtung zum Vorbereiten und Vorwärmen von Vorformlingen
- 12: Blaseinrichtung
- 19: Behälterherstellungssteuerung
- 20: Vorrichtung zum Befüllen von Behältern mit einem Füllprodukt
- 20a: Mixer
- 21: Füllerkarussell
- 22: Füllorgan
- 23: Füllventil
- 23a: Ventilmündung
- 23b: Proportionalventil
- 24: Behälterhalterung
- 24a: Halteklammer
- 25: Füllproduktreservoir
- 26: Füllproduktleitung
- 26a: Erster Abschnitt der Füllproduktleitung
- 26b: Zweiter Abschnitt der Füllproduktleitung
- 26c: Dritter Abschnitt der Füllproduktleitung
- 26d: Vierter Abschnitt der Füllproduktleitung
- 27: Durchflussmesser
- 28: Filter
- 29: Füllersteuerung
- 30: Vorrichtung zum Verschließen von Behältern
- 31: Verschließerkarussell
- 39: Verschließersteuerung
- 40: Vorrichtung zur Etikettierung von Behältern
- 50: Puffer
- 60: Packvorrichtung
- 70: Roboter
- 80: Palettierer

- 100: Behälter
- 110: Behältermündung

- 400: Vorrichtung zur prädiktiven Wartung
- 410: Internet-/Cloud-Anwendung
- 420: Datenverarbeitung

- R: Rotationsachse

## Patentansprüche

1. Vorrichtung (400) zur prädiktiven Wartung einer Behälterbehandlungsanlage (1), vorzugsweise einer Getränkeabfüllanlage, wobei die Vorrichtung (400) eingerichtet ist, um
- Prozessdaten zumindest eines Behandlungsvorgangs eines oder mehrerer Behälter (100), durchgeführt von der Behälterbehandlungsanlage (1), zu empfangen,
- den Behandlungsvorgang anhand der Prozessdaten zumindest einer aus mehreren Güteklassen zuzuordnen, und
- aus einer Analyse der Güteklassen einen Verschleißzustand einer oder mehrerer Komponenten der Behälterbehandlungsanlage (1) abzuleiten.

2. Vorrichtung (400) nach Anspruch 1, **dadurch gekennzeichnet, dass** eine der Güteklassen gute Behandlungsvorgänge und eine weitere der Güteklassen schlechte Behandlungsvorgänge charakterisieren.

3. Vorrichtung (400) nach Anspruch 2, **dadurch gekennzeichnet, dass** die Vorrichtung (400) ferner eingerichtet ist, um für zumindest einen Behandlungsvorgang aus der Güteklasse der schlechten Behandlungen eine Analyse vorangegangener Behandlungsvorgänge vorzunehmen und aus deren Prozessdaten eine weitere Güteklasse, die grenzwertige Behandlungsvorgänge charakterisiert, abzuleiten.

4. Vorrichtung (400) nach einem der vorigen Ansprüche, **dadurch gekennzeichnet, dass** die Vorrichtung (400) eingerichtet ist, um Prozessdaten von Behandlungsvorgängen einer oder mehrerer weiterer Behälterbehandlungsanlagen (1a, 1b, 1c) zu empfangen und die Behandlungsvorgänge der weiteren Behälterbehandlungsanlagen (1a, 1b, 1c) anhand der entsprechenden Prozessdaten den Güteklassen zuzuordnen und/oder daraus Güteklassen zu erstellen.

5. Vorrichtung (400) nach einem der vorigen Ansprüche, **dadurch gekennzeichnet, dass** die Vorrichtung (400) eingerichtet ist, um den ermittelten Verschleißzustand einer oder mehrerer Komponenten der Behälterbehandlungsanlage (1) oder eine daraus abgeleitete Handlungsempfehlung an eine Einrichtung, vorzugsweise die Behälterbehandlungsanlage (1), zurückzumelden.

6. Vorrichtung (400) nach einem der vorigen Ansprüche, **dadurch gekennzeichnet, dass** die Vorrichtung (400) eine Internet-/Cloud-Anwendung (410) und/oder eine Datenverarbeitung (420) umfasst, wobei die Datenverarbeitung (420) vorzugsweise eine zentrale oder dezentrale Datenbank und/oder einen Server und/oder eine KI-Anwendung bereitstellt.

7. Vorrichtung (400) nach einem der vorigen Ansprüche, **dadurch gekennzeichnet, dass** der Behandlungsvorgang ein Füllvorgang des Einfüllens eines Füllprodukts in zumindest einen Behälter (100) ist, wobei die von der Vorrichtung (400) empfangenen Prozessdaten vorzugsweise Daten eines oder mehrerer der folgenden Prozessparameter umfassen: Abfülldruck, Vorspannzeit, Vorspanndruck, Evakuierungsdruck, Füllgeschwindigkeit, Füllkurve, Entlastungszeit.

8. System mit einer Vorrichtung (400) nach einem der vorigen Ansprüche und einer mit dieser in Kommunikation stehenden Behälterbehandlungsanlage (1).

9. System nach Anspruch 8, **dadurch gekennzeichnet, dass** die Behälterbehandlungsanlage (1) eine Getränkeabfüllanlage mit einer Vorrichtung (20) zum Befüllen von Behältern (100) mit einem Füllprodukt ist, wobei
die Vorrichtung (20) zum Befüllen von Behältern (100) eine Füllersteuerung (29) aufweist, die eingerichtet ist, um einen Füllvorgang der Vorrichtung (20) zum Befüllen von Behältern (100) zu steuern, und
die Füllersteuerung (29) unmittelbar oder über eine Anlagensteuerung (9) mit der Vorrichtung (400) zur prädiktiven Wartung in Kommunikation steht und eingerichtet ist, um Prozessdaten des Füllvorgangs an die Vorrichtung (400) zur prädiktiven Wartung zu senden.

10. System nach Anspruch 9, **dadurch gekennzeichnet, dass** die Vorrichtung (20) zum Befüllen von Behältern (100) ein Füllerkarussell (21) und mehrere an dessen Außenumfang installierte Füllorgane (22) aufweist, die eingerichtet sind, um das Füllprodukt in entsprechende Behälter (100) einzuleiten, wobei die Vorrichtung (400) zur prädiktiven Wartung eingerichtet ist, um einen Verschleißzustand eines oder mehrerer der Füllorgane (22) abzuleiten.

11. Verfahren zur prädiktiven Wartung einer Behälterbehandlungsanlage (1), vorzugsweise einer Getränkeabfüllanlage, wobei das Verfahren umfasst:
- Empfangen von Prozessdaten zumindest eines Behandlungsvorgangs eines oder mehrerer Behälter (100), durchgeführt von der Behälterbehandlungsanlage (1);
- Zuordnen des Behandlungsvorgangs anhand der Prozessdaten zumindest einer aus mehreren Güteklassen, und
- Ableiten aus einer Analyse der Güteklassen eines Verschleißzustands einer oder mehrerer Komponenten der Behälterbehandlungsanlage (1).

12. Verfahren nach Anspruch 11, **dadurch gekennzeichnet, dass** eine der Güteklassen gute Behandlungsvorgänge und eine weitere der Güteklassen schlechte Behandlungsvorgänge charakterisieren.

13. Verfahren nach Anspruch 12, **dadurch gekennzeichnet, dass** ferner für zumindest einen Behandlungsvorgang aus der Güteklasse der schlechten Behandlungen eine Analyse vorangegangener Behandlungsvorgänge vorgenommen und aus deren Prozessdaten eine weitere Güteklasse, die grenzwertige Behandlungsvorgänge charakterisiert, abgeleitet wird.

14. Verfahren nach einem der Ansprüche 11 bis 13, **dadurch gekennzeichnet, dass** Prozessdaten von Behandlungsvorgängen einer oder mehrerer weiterer Behälterbehandlungsanlagen (1a, 1b, 1c) empfangen und die Behandlungsvorgänge der weiteren Behälterbehandlungsanlagen (1a, 1b, 1c) anhand der entsprechenden Prozessdaten den Güteklassen zugeordnet und/oder daraus Güteklassen erstellt werden.

15. Verfahren nach einem der Ansprüche 11 bis 14, **dadurch gekennzeichnet, dass** der Behandlungsvorgang ein Füllvorgang des Einfüllens eines Füllprodukts in zumindest einen Behälter (100) ist, wobei die empfangenen Prozessdaten vorzugsweise Daten eines oder mehrerer der folgenden Prozessparameter umfassen: Abfülldruck, Vorspannzeit, Vorspanndruck, Evakuierungsdruck, Füllgeschwindigkeit, Füllkurve, Entlastungszeit.
